# EUROPÄISCHE PATENTANMELDUNG

(11) **EP 3 831 890 A1**
(43) Veröffentlichungstag der Anmeldung: **09.06.2021**
(21) Anmeldenummer: 19213262.9
(22) Anmeldetag: 03.12.2019
(51) Int. Cl.: C09B 62/513, D06P 3/66

(54) **AZOFARBSTOFFE, VERFAHREN ZU IHRER HERSTELLUNG UND IHRE VERWENDUNG**

(71) Anmelder: CHT Switzerland AG, 9462 Montlingen (CH)
(72) Erfinder: DUERR, Jimmel, 9444 Diepoldsau (CH); STEFFENS, Ralph, 9494 Schaan (LI); EHRENBERG, Stefan, 9442 Berneck (CH); WALCHER, Gunter, 6863 Egg (AT)
(74) Vertreter: Schaad, Balass, Menzl & Partner AG

(57) **Zusammenfassung**

Die Erfindung betrifft Azofarbstoffe, Verfahren zu ihrer Herstellung und ihre Verwendung zum Färben oder Bedrucken von Materialien, insbesondere textilen Fasermaterialien.

Es ist eine Aufgabe der vorliegenden Erfindung, Azofarbstoffe im gelb-roten bis roten Farbspektrum bereitzustellen, die einen guten Aufbau und gute Echtheiten aufweisen.

Die vorliegende Erfindung betrifft Azofarbstoffe der Formel (1)

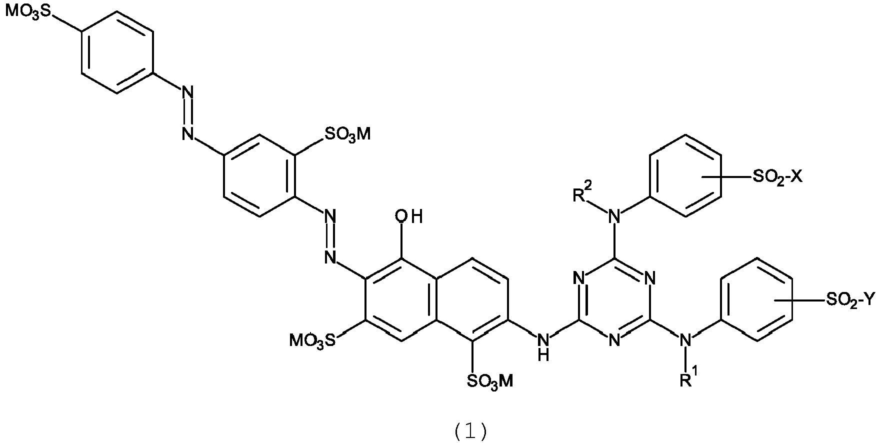

worin
M für Wasserstoff oder ein Alkalimetall steht;
R¹ Wasserstoff, Methyl oder Ethyl bedeutet;
R² Wasserstoff, Methyl oder Ethyl sind;
X für -OM, -CH=CH₂ oder -CH₂-CH₂-Z steht und
Y -CH=CH₂, -CH₂-CH₂-Z bedeutet, und
worin
Z eine unter Alkaliwirkung abspaltbare Gruppe ist.

## Beschreibung

Die Erfindung betrifft Azofarbstoffe, Verfahren zu ihrer Herstellung und ihre Verwendung zum Färben oder Bedrucken von Materialien, insbesondere textilen Fasermaterialien.

Durch die bekannten Farbstoffe, wie sie beispielsweise in der JP 61272269 beschrieben sind, wird der Bedarf an Textilfärbemitteln allerdings noch nicht voll gedeckt. Es besteht insbesondere ein Bedarf an brillanten gelbstichigroten bis roten Reaktivazofarbstoffen, mit gutem Aufbau und guten Echtheiten.

Es ist daher eine Aufgabe der vorliegenden Erfindung, Azofarbstoffe im gelb-roten bis roten Farbspektrum bereitzustellen, die einen guten Aufbau und gute Echtheiten aufweisen.

Diese Aufgabe wird gelöst durch die Azofarbstoffe gemäss Anspruch 1 sowie das Verfahren zu ihrer Herstellung gemäss Anspruch 7 und ihre Verwendung gemäss Anspruch 8. Bevorzugte Ausführungsformen der Erfindung sind Gegenstand der abhängigen Ansprüche.

Die vorliegende Erfindung betrifft Azofarbstoffe der Formel (1) 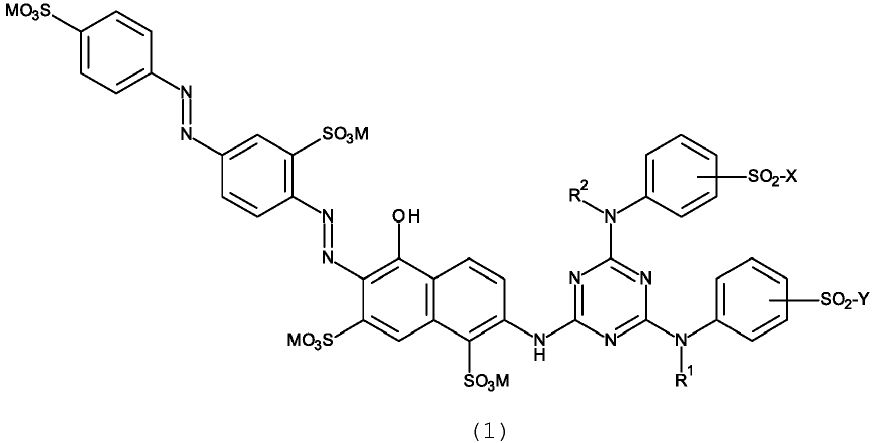 worin
- M: für Wasserstoff oder ein Alkalimetall steht;
- R¹: Wasserstoff, Methyl oder Ethyl bedeutet;
- R²: Wasserstoff, Methyl oder Ethyl sind;
- X: für -OM, -CH=CH₂ oder -CH₂-CH₂-Z steht und
- Y: -CH=CH₂, -CH₂-CH₂-Z bedeutet,
worin
Z eine unter Alkaliwirkung abspaltbare Gruppe ist.

Für Z stehende, unter Alkaliwirkung abspaltbare Gruppen sind beispielsweise Halogen, wie Chlor (-Cl) und Brom (-Br) oder Sulfato.

Die Gruppen -SO₂-Y und -SO₂-X können teilweise als Vinylsulfon-Gruppe und teilweise als -SO₂CH₂CH₂Z, bevorzugt als β-Sulfatoethylsulfonyl-Gruppe, vorliegen. Der Anteil des jeweiligen Farbstoffs mit der Vinylsulfonyl-Gruppe beträgt bevorzugt bis zu etwa 30 Mol-%, bezogen auf die jeweilige Gesamtfarbstoffmenge.

Es wurde überraschenderweise gefunden, dass die erfindungsgemässen Azofarbstoffe gemäss der obigen Formel (1) die Anforderungen an Aufbau, Brillanz, Auswaschbarkeit und Echtheiten im hohen Mass erfüllen.

Bevorzugt betrifft die vorliegende Erfindung Azofarbstoffe gemäss der obigen Formel (1) und den oben angegebenen Bedeutungen für M, R¹, R² und Z, wobei Y für -CH=CH2, β-Chlorethyl oder β-Sulfatoethyl steht und X für -OH steht.

Unabhängig von den obigen bevorzugten Bedeutungen in Bezug auf die Gruppen Y und X, so ist für die Azofarbstoffe der obigen Formel (1) ist bevorzugt, dass R² und/oder R¹ für H steht bzw. stehen. Die Farbstoffe mit diesen bevorzugten Gruppen weisen eine hohe Wetterechtheit nach DIN EN ISO 105-B04 auf.

Die erfindungsgemässen Azofarbstoffe der Formel (1) können als Präparationen in fester oder flüssiger (gelöster) Form vorliegen. In fester Form enthalten sie im Allgemeinen die bei wasserlöslichen und bevorzugt faserreaktiven Azofarbstoffen üblichen Elektrolytsalze, wie Natriumchlorid, Kaliumchlorid und/oder Natriumsulfat.

Des Weiteren können solche Präparationen die in Handelsfarbstoffen üblichen Hilfsmittel enthalten; etwa Puffersubstanzen, die in wässriger Lösung einen pH-Wert zwischen 3 und 7 einzustellen vermögen. Als Puffersubstanzen können beispielsweise Natriumacetat, Natriumborat, Natriumhydrogencarbonat, Natriumdihydrogen-phosphat, Natriumcitrat, Dinatriumhydrogenphosphat, und/oder Natriumtripolyphosphat zum Einsatz kommen. Ausserdem können die Präparationen geringe Mengen an Sikkativen beinhalten.

Insbesondere wenn die Azofarbstoffe in flüssiger, wässriger Lösung vorliegen (einschliesslich des Gehalts an bei Druckpasten üblichen Verdickungsmitteln), können weitere Substanzen enthalten sein, die die Haltbarkeit dieser Präparationen gewährleisten, wie beispielsweise schimmelverhütende und oder gefrierpunktsenkende Mittel.

Bevorzugt liegen die erfindungsgemässen Azofarbstoffe der Formel (1) als elektrolytsalzhaltige Farbstoffpulver mit einem Gehalt von 20 bis 95 Gew.-%, bezogen auf das Farbstoffpulver bzw. die Präparation, vor. Die Farbstoffpulver können zudem die oben erwähnten Puffersubstanzen in einer Gesamtmenge von bis zu 10 Gew.-%, bezogen auf das Farbstoffpulver enthalten.

Die erfindungsgemässen Azofarbstoffe der Formel (1) können auch in wässriger Lösung (Flüssigpräparationen) vorliegen. In diesem Falle beträgt der Gesamtfarbstoffgehalt solchen wässrigen Lösungen bis zu etwa 40 Gew.-%, wie beispielsweise zwischen 5 und 40 Gew.-%, wobei der Elektrolytsalzgehalt in diesen wässrigen Lösungen bevorzugt unterhalb 10 Gew.-% liegt (bezogen auf die jeweilige wässrige Lösung). Weiter können die wässrigen Lösungen die oben erwähnten Puffersubstanzen in einer Menge von bis zu 10 Gew.-%, bevorzugt bis zu 2 Gew.-%, enthalten.

Die erfindungsgemässen Azofarbstoffe der Formel (1) können in üblicher Weise hergestellt werden, etwa durch Synthese mittels der Diazotierungs- und Kupplungsreaktionen und Umsetzungsreaktionen mit einer Chlortriazinylkomponente in einer dem Fachmann geläufigen Weise mit den hierzu erforderlichen Mengenanteilen.

Die erfindungsgemässen Azofarbstoffe der Formel (1) können durch Umsetzung der nachfolgenden Verbindungen der allgemeinen Formeln (2), (3), (4) und (6) 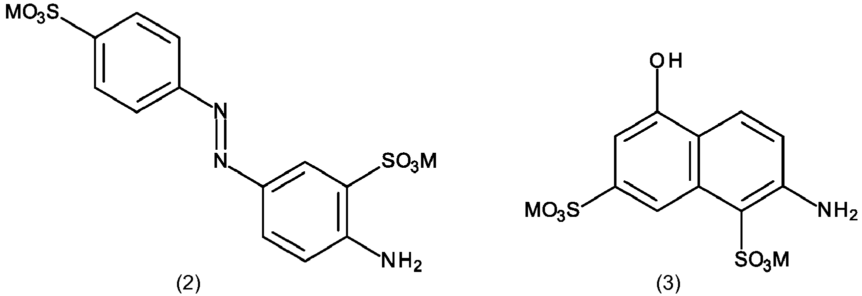 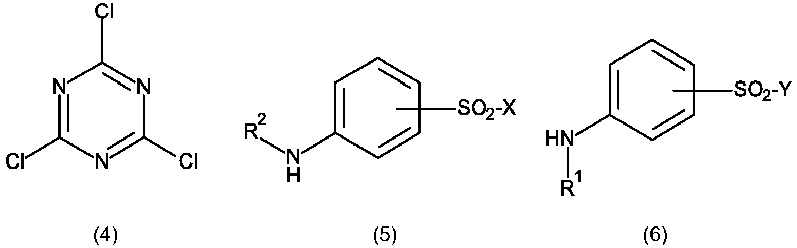 mit einer Verbindung der Formel (5) hergestellt werden, wobei M, R¹, R², X und Y die oben für Formel (1) angegebene Bedeutung haben.

Zur Herstellung der Azofarbstoffe der Formel (1) wird in einer bevorzugten Ausführungsform
a) die Verbindung der Formel (3) mit Cyanurchlorid (obige Formel (4)) zu einer Verbindung der Formel (7) umgesetzt, 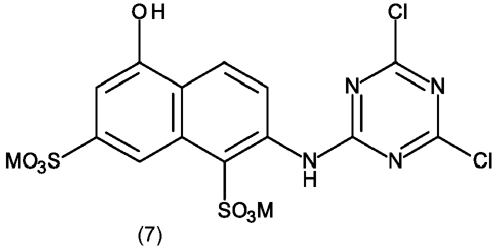
b) anschliessend wird die Verbindung der Formel (7) mit einer Verbindung der Formel (6) umgesetzt, wobei die Verbindung der Formel (8) 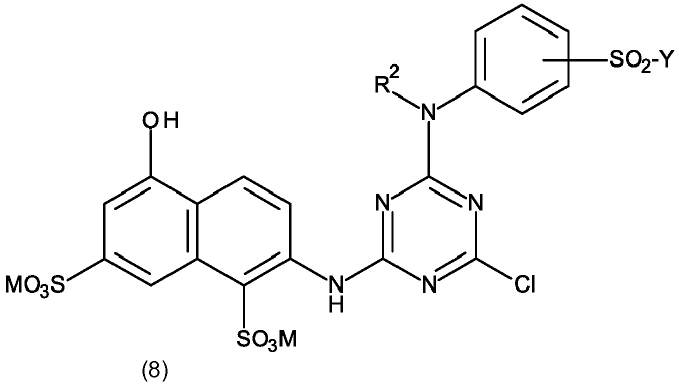 entsteht,
c) worauf die Verbindung der Formel (2) diazotiert und auf die Verbindung der Formel (8) gekuppelt wird, und schliesslich
d) mit einer Verbindung der obigen Formel (5) zur erfindungs-gemässen Verbindung der Formel (1) umgesetzt wird.

Die Abscheidung der auf chemischem Wege hergestellten erfindungsgemässen Azofarbstoffe der Formel (1) aus deren Syntheselösung kann nach allgemein bekannten Methoden erfolgen, beispielsweise durch Ausfällen aus dem Reaktionsmedium mittels Elektrolyten, wie beispielsweise Natriumchlorid oder Kaliumchlorid, oder durch entweder Eindampfen oder Sprühtrocknung der Reaktionslösung, wobei dieser Reaktionslösung eine Puffersubstanz zugefügt werden kann. Gegebenenfalls können aus der Reaktion stammende Salze vorher durch Umkehrosmose bzw. Nanofiltration entfernt werden.

Die erfindungsgemässen Azofarbstoffe der Formel (1) besitzen wertvolle anwendungstechnische Eigenschaften und können zum Färben und Bedrucken von Carbonamid- und/oder Hydroxygruppen-haltigen Materialien wie Baumwolle verwendet werden. Carbonamidgruppen-haltige Materialien sind beispielsweise synthetische oder natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Beispiele für Hydroxygruppen-haltige Materialien natürlichen oder synthetischen Ursprungs sind etwa Cellulosefasermaterialien oder deren Regeneratprodukte und Polyvinylalkohole. Cellulosefasermaterialien sind beispielsweise Baumwolle, aber auch andere Pflanzenfasern, wie Leinen, Hanf, Jute und Ramiefaser. Regenerierte Cellulosefasern sind beispielsweise Zellwolle (Spinnfasern), Modal-, Lyocell- und Cuprofasern und Viskosekunstseide.

Die oben genannten Materialien können beispielsweise in Form von Flächengebilden, wie Papier und Leder; in Form von Folie, wie beispielsweise Polyamidfolien; oder in Form einer Masse, beispielsweise aus Polyamid oder Polyurethan, vorliegen. Insbesondere liegen Sie aber bevorzugt in Form von Fasern der genannten Materialien vor.

So können die erfindungsgemässen Azofarbstoffe der Formel (1) insbesondere zum Färben und Bedrucken cellulosehaltiger Fasermaterialien aller Art verwendet werden. Insbesondere eignen sie sich auch zum Färben oder Bedrucken von Polyamidfasern oder von Mischgewebe aus Polyamid mit Baumwolle oder mit Polyesterfasern. Ebenso können Naturfasern, insbesondere Wolle, mit den erfindungsgemässen Azofarbstoffen gefärbt werden.

Die vorliegende Erfindung betrifft somit auch die Verwendung der erfindungsgemässen Azofarbstoffe der Formel (1) zum Färben und Bedrucken von textilen Fasermaterialien, insbesondere von Naturfasern oder von Carbonamid- und/oder Hydroxy-gruppenhaltigen Fasermaterialien. Ebenso betrifft die vorliegende Erfindung Verfahren zum Färben oder Bedrucken solcher textilen Fasermaterialien in üblichen Verfahrensweisen, bei welchen einen oder mehrere erfindungsgemässe Azofarbstoffe der Formel (1) als Färbemittel eingesetzt werden. Die erfindungsgemässen Azofarbstoffe liefern auf diesen Materialien, bevorzugt Naturfasermaterialien oder Carbonamid- und/oder Hydroxygruppen-haltigen Fasermaterialien, rote Färbungen mit sehr guten Echtheitseigenschaften und einem guten Aufbau.

Vorteilhafterweise können die bei der Herstellung anfallenden Lösungen der erfindungsgemässen Azofarbstoffe der Formel (1), gegebenenfalls nach Zusatz einer Puffersubstanz und/oder nach Konzentrieren oder Verdünnen, direkt als Flüssigpräparation als Färbemittel eingesetzt werden.

Die erfindungsgemässen Azofarbstoffe der Formel (1) lassen sich auf den genannten Materialien, bevorzugt auf den oben genannten textilen Fasermaterialien, entsprechend der für wasserlösliche und bevorzugt faserreaktive Azofarbstoffe bekannten Anwendungstechniken applizieren und fixieren.

Auf Cellulosefasern erhält man nach den Ausziehverfahren sowohl aus kurzer, als auch aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten. Das Flottenverhältnis kann innerhalb eines weiten Bereichs gewählt werden und liegt beispielsweise im Bereich zwischen 1:3 und 1:100, vorzugsweise im Bereich zwischen 1:5 und 1:30.

Man färbt bevorzugt in wässrigem Bad bei Temperaturen zwischen 40°C und 105°C, gegebenenfalls bei einer Temperatur von bis zu 130°C unter Druck, und gegebenenfalls in Gegenwart von üblichen Färberei-hilfsmitteln. Zur Erhöhung der Nassechtheiten des gefärbten Materials kann nicht fixierter Farbstoff in einer Nachbehandlung entfernt werden. Diese Nachbehandlung erfolgt bevorzugt bei einem pH-Wert von 8 bis 9 und Temperaturen von 75 bis 100°C.

In einer Ausführungsform kann das Material in das warme Bad einbracht werden und dieses allmählich auf die gewünschte Temperatur erwärmt werden, um dann den Färbeprozess zu Ende zu führen. Die oben erwähnten neutralen Salze, wie Natriumchlorid oder Natriumsulfat, beschleunigen das Ausziehen der Azofarbstoffe und können dem Bade gegebenenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu 60°C, durch Dämpfen oder mit Trockenhitze in üblicher Weise fixiert werden kann.

Dem Fachmann sind ferner Druckverfahren für Cellulosefasern bekannt, die einphasig oder zweiphasig durchgeführt werden können. Nach solch üblichen Druckverfahren erhält man mit den erfindungsgemässen Azofarbstoffen der Formel (1) farbstarke Drucke mit gutem Stand der Konturen und einem klaren Weissfond. Es hat sich zudem gezeigt, dass der Ausfall der Drucke nur wenig von schwankenden Fixierbedingungen abhängig ist.

Bei einphasigen Druckverfahren für Cellulosefasern erfolgt das Bedrucken beispielsweise mit einer Natriumbicarbonat oder ein anderes säurebindendes Mittel enthaltenden Druckpaste und anschliessendem Dämpfen bei 100°C bis 130°C.

Zweiphasiges Bedrucken erfolgt beispielsweise durch Bedrucken mit neutraler oder schwach saurer Druckfarbe und anschliessendem Fixieren, entweder durch Hindurchführen durch ein heisses, elektrolythaltiges, alkalisches Bad oder durch Überklotzen mit einer alkalischen, elektrolythaltigen Klotzflotte und anschliessendem Verweilen oder Dämpfen oder Behandlung mit Trockenhitze des alkalisch überklotzten Materials. Bei einer Fixierung mittels Trockenhitze verwendet man nach den üblichen Thermofixierverfahren Heissluft von 120°C bis 200°C. Neben dem üblichen Wasserdampf mit Temperaturen von 101°C bis 103°C kann auch überhitzter Dampf und Druckdampf mit Temperaturen von bis zu 160°C eingesetzt werden.

Als säurebindende und die Fixierung der Azofarbstoffe auf den Cellulosefasern bewirkende Mittel können beispielsweise wasserlösliche, basische Salze der Alkalimetalle und/oder Erdalkalimetalle von anorganischen oder organischen Säuren, oder in der Hitze Alkali freisetzende Verbindungen, eingesetzt werden. Bevorzugt werden Alkalimetallhydroxide und/oder Alkalimetallsalze von schwachen bis mittelstarken anorganischen oder organischen Säuren verwendet, wobei von den Alkalimetallverbindungen Natrium- und Kalium-verbindungen bevorzugt sind. Bevorzugte säurebindende Mittel sind etwa Natriumhydroxid, Kaliumhydroxid, Natriumcarbonat, Natriumbicarbonat, Kaliumcarbonat, Natriumformiat, Dinatriumhydrogenphosphat, Trinatrium-phosphat und/oder Wasserglas.

Die erfindungsgemässen Azofarbstoffe der Formel (1) zeichnen sich auf cellulosehaltigen Fasermaterialien bei Anwendung in den bekannten Färbe- und Druckverfahren durch eine hohe Brillanz und einen steilen Verlauf der Aufbaukurve aus. Ausserdem weisen die mit den erfindungsgemässen Azofarbstoffen der Formel (1) erhältlichen Färbungen und Drucke auf cellulosehaltigen Fasermaterialien eine gute Wetterechtheit auf.

Weiterhin zeigen die Färbungen und Drucke nach der üblichen Nachbehandlung durch Spülen zur Entfernung von nicht fixierten Farbstoffanteilen ausgezeichnete Nassechtheiten, zumal sich nicht fixierte Farbstoffanteile leicht auswaschen lassen.

Die erfindungsgemässen Azofarbstoffe der Formel (1) können auch für das bevorzugt faserreaktive Färben von Naturfasern, insbesondere Wolle, Verwendung finden. Filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) lässt sich mit sehr guten Echtheitseigenschaften färben. Das Verfahren des Färbens auf Wolle erfolgt hierbei in üblicher und bekannter Färbeweise aus saurem Milieu. So kann beispielsweise dem Färbebad Essigsäure und/oder Ammoniumsulfat oder Essigsäure und Ammoniumacetat oder Natriumacetat zugefügt werden, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsprodukts von Cyanurchlorid mit der dreifachen molaren Menge einer Aminosulfonsäure und/oder einer Aminonaphthalinsulfonsäure oder auf Basis eines Umsetzungsprodukts von Stearylamin mit Ethylenoxid.

In einer beispielhaften Ausführungsform wird der erfindungsgemässe Azofarbstoff der Formel (1) zunächst aus saurem Färbebad mit einem pH-Wert von etwa 3,5 bis 5,5 unter Kontrolle des pH-Werts dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den erfindungsgemässen Azofarbstoffen und der zu färbenden Faser herbeizuführen. Gleichzeitig wird der nicht reaktiv gebundene Farbstoffanteil abgelöst.

Die oben beschriebene Verfahrensweise gilt auch zur Herstellung von Färbungen auf Fasermaterialien aus anderen natürlichen Polyamiden oder aus synthetischen Polyamiden und Polyurethanen. Zum Färben dieser Materialien können die üblichen, in der Literatur und dem Fachmann bekannten Färbe- und Druckverfahren herangezogen werden (siehe zum Beispiel H.-K. Rouette, Handbuch der Textilveredlung, 2006, Deutscher Fachverlag GmbH, Frankfurt am Main). In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert eingestellt und die eigentliche Färbung bei einer Temperatur zwischen 60°C und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemässen Azofarbstoffe sehr gut ist, lassen sie sich auch mit Vorteil bei üblichen kontinuierlichen Färbeverfahren einsetzen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmässig beschriebenen Verbindungen sind in Form der Natriumsalze geschrieben, da sie im Allgemeinen in Form ihrer Salze, vorzugsweise Natrium- oder Kaliumsalze, hergestellt und isoliert und in Form ihrer Salze zum Färben verwendet werden.

Die in den nachfolgenden Beispielen genannten Ausgangsverbindungen können in Form der freien Säure oder ebenso in Form ihrer Salze, vorzugsweise Alkalimetall-salze, wie Natrium- oder Kaliumsalze, in die Synthese eingesetzt werden.

### Beispiel 1

**a)** 19 Teile Cyanurchlorid werden in 200 Teilen Wasser und 100 Teilen Eis in Gegenwart eines Netzmittels suspendiert. Man gibt 32 Teile 2-Amino-5-hydroxynaphthalin-1,7-disulfonsäure hinzu und rührt bei 5-10°C für ca. 3-4 Stunden bis zum Reaktionsende. Der pH-Wert wird während der Reaktion mit 20%iger Natronlauge bei pH 1,5 - 2,0 gehalten.
**b)** 29,5 Teile 3-(β-Sulfatoethylsulfonyl)-anilin werden zur Reaktionsmischung aus Schritt a) gegeben. Bei 35-40°C wird der pH-Wert bei 4,0-4,5 mit 15%iger Sodalösung bis zum Ende der Reaktion gehalten.
**c)** 35,7 Teile 4-Aminoazobenzol-3,4'-disulfonsäure werden in 300 Teilen Wasser bei 15°C vorgelegt. Nach Zugabe von 23 Volumenteilen 31%iger Salzsäure wird mit 20,5 Volumenteilen 5 molarer Natriumnitritlösung zügig diazotiert. Nach Beendigung der Reaktion wird der Nitritüberschuss beseitigt.
**d)** Die gemäss c) hergestellte Diazoverbindung wird zu der gemäss b) erhaltenen Reaktionsmischung gegeben, wobei ein pH-Wert zwischen 6,5 und 7,0 mit 15%iger Sodalösung gehalten wird.
**e)** Zu der unter d) erhaltenen Reaktionsmischung werden 20 Teile 3-Aminobenzolsulfonsäure gegeben. Dabei wird der pH mit 15%iger Sodalösung zwischen 3 und 3,5 gehalten. Bis zum Reaktionsende wird bei einer Temperatur von 70-75°C gerührt. Als Reaktionsprodukt wird der erfindungsgemässe Farbstoff (λₘₐₓ = 509 nm) der Formel (1a) (in Form der freien Säure) erhalten.

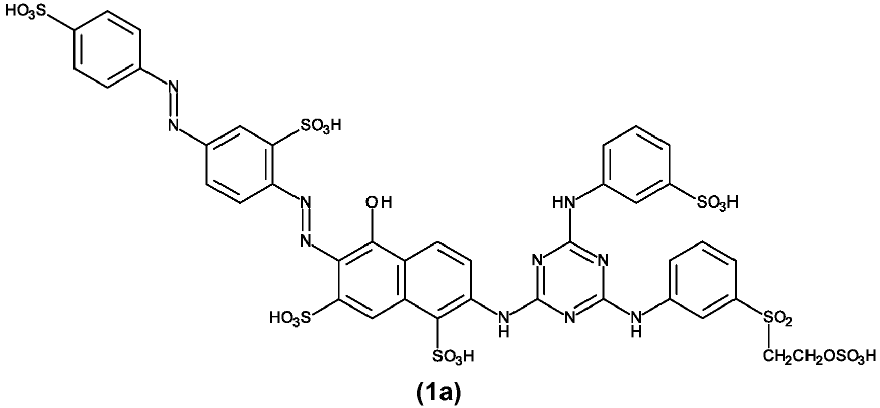

Entsprechend den Angaben der in der obigen Beschreibung genannten Beispiele können weitere erfindungsgemässe Azofarbstoffe der allgemeinen Formel (1) erhalten werden. Konkrete Ausführungsformen sind etwa:

### Beispiel 2

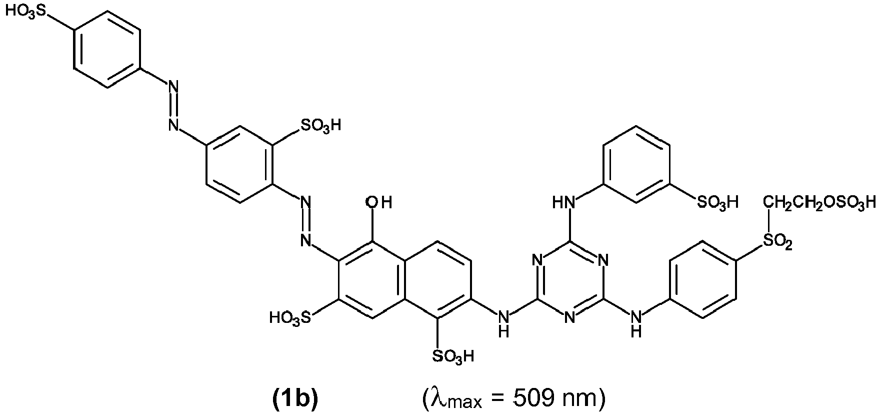

### Beispiel 3

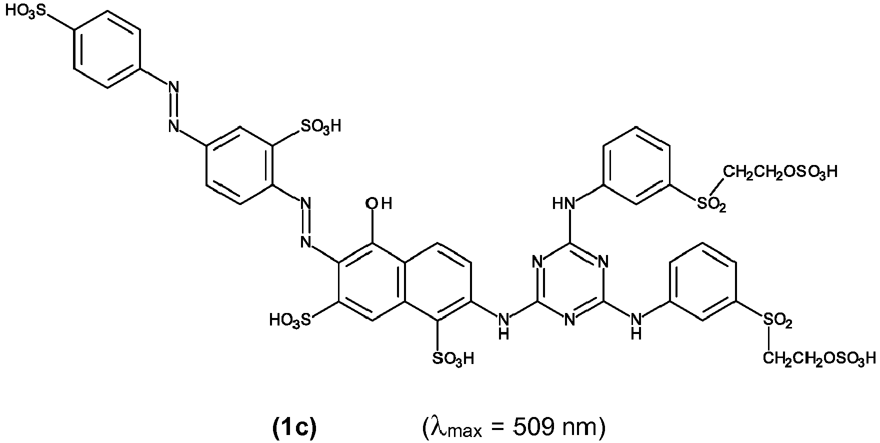

### Beispiel 4

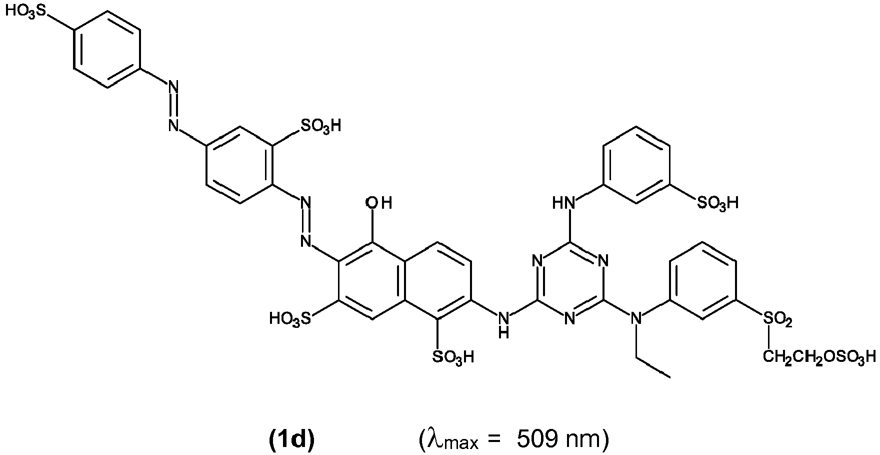

### Beispiel 5

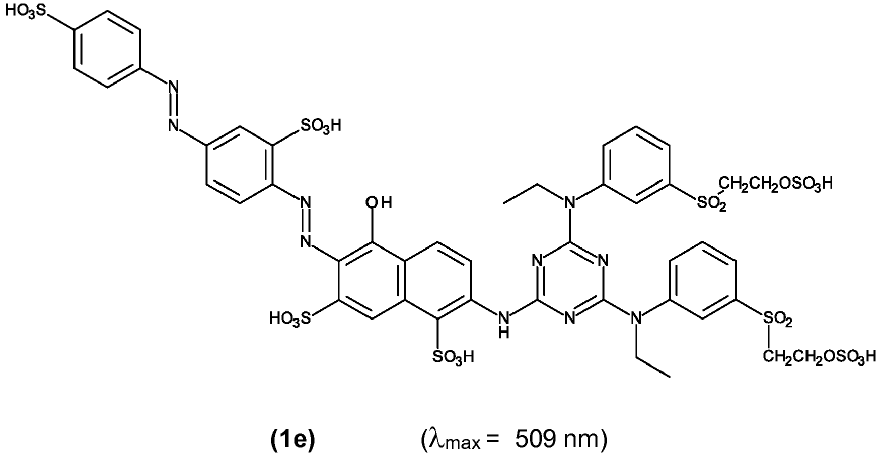

### Beispiel 6

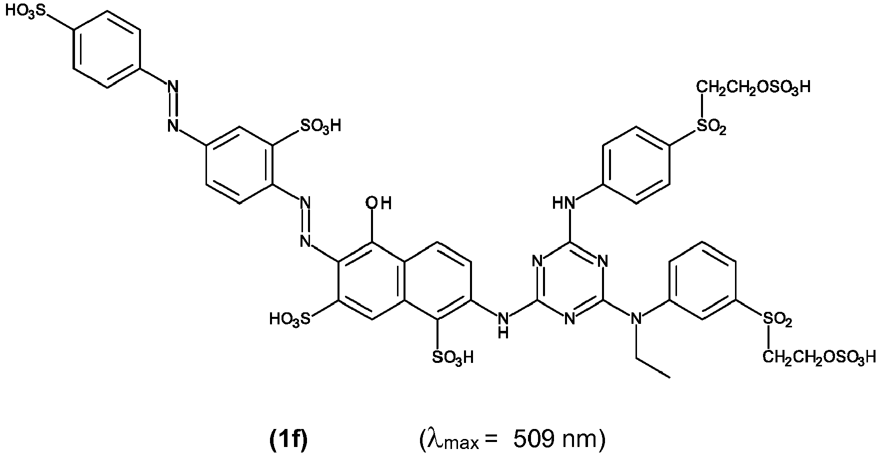

### Beispiel 7

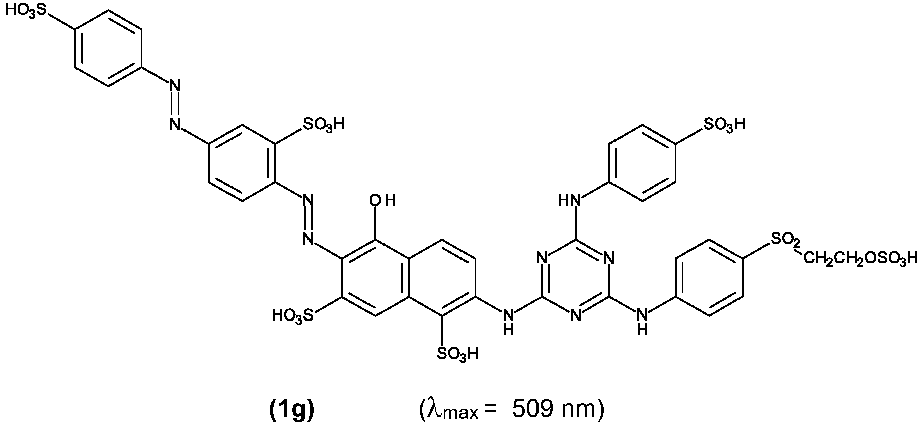

### Färbungsvorgang

### Beispiel 8

2 Teile des gemäss Beispiel 1 erhaltenen Azofarbstoffs der Formel (1a) und 50 Teile Natriumchlorid werden in 1000 Teilen Wasser gelöst und 5 Teile Natriumcarbonat, 0,7 Teile Natriumhydroxid (in Form einer 32,5 %igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann innerhalb von 30 Minuten auf Endtemperatur (60°C) erhöht und diese Temperatur wird weitere 60 Minuten gehalten. Danach wird die gefärbte Ware mit Permutit-Wasser gespült. Die gefärbte Ware wird bei 40°C in 1000 Teilen einer wässrigen Lösung, die 1 Teil einer 50%igen Essigsäure enthält, während 10 Minuten neutralisiert. Mit Permutit-Wasser wird bei 70°C nachgespült und dann 15 Minuten mit einem Waschmittel kochend geseift, nochmals gespült und getrocknet. Man erhält eine rote Färbung mit sehr guten Echtheitseigenschaften.

Vergleichbare Ergebnisse werden erhalten, wenn man das beschriebene Verfahren mit den Azofarbstoffen gemäss Beispielen 2-7 durchführt.

### Beispiel 9

4 Teile des gemäss Beispiel 1 erhaltenen Farbstoffs der Formel (1a) und 50 Teile Natriumchlorid werden in 998 Teilen Wasser gelöst und 5 Teile Natriumcarbonat, 2 Teile Natriumhydroxid (in Form einer 32,5 %igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Beispiel 8 angegeben. Man erhält eine farbstarke rote Färbung mit sehr guten Echtheitseigenschaften.

Vergleichbare Ergebnisse werden erhalten, wenn man das beschriebene Verfahren mit den gemäss Beispielen 1-8 erhaltenen Azofarbstoffen durchführt.

## Patentansprüche

1. Azofarbstoffe der Formel (1) 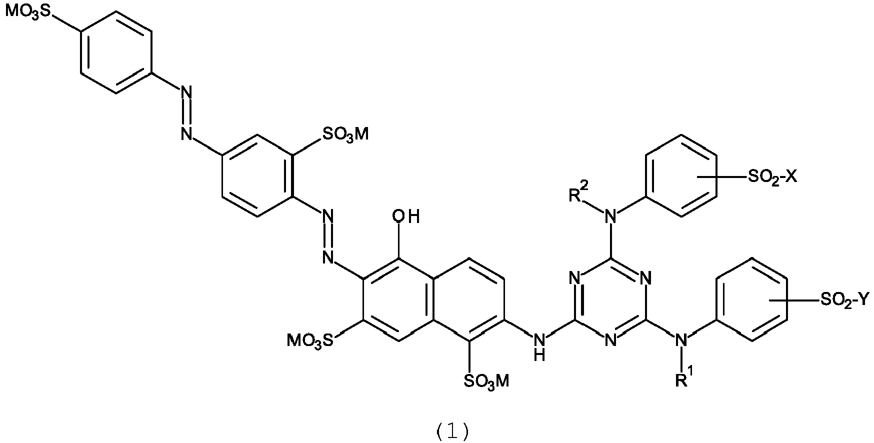 worin
M für Wasserstoff oder ein Alkalimetall steht;
R¹ Wasserstoff, Methyl oder Ethyl bedeutet;
R² Wasserstoff, Methyl oder Ethyl sind;
X für -OM, -CH=CH₂ oder -CH₂-CH₂-Z steht und
Y -CH=CH₂, -CH₂-CH₂-Z bedeutet,
worin
Z eine unter Alkaliwirkung abspaltbare Gruppe ist.

2. Azofarbstoff gemäss Anspruch 1, **dadurch gekennzeichnet,**
**dass** Y für
-CH=CH₂, β-Chlorethyl oder β-Sulfatoethyl und
X für
-OH steht.

3. Azofarbstoff gemäss Anspruch 1 oder 2, **dadurch gekennzeichnet, dass** R² für H steht.

4. Azofarbstoff gemäss einem der Ansprüche 1 bis 3, **dadurch gekennzeichnet, dass** R¹ für H steht.

5. Azofarbstoff gemäss einem der Ansprüche 1 bis 4, **dadurch gekennzeichnet, dass** R¹ und R² für H stehen.

6. Azofarbstoff gemäss einem der Ansprüche 1 bis 5, **gekennzeichnet durch** eine Struktur gemäss einer der Formeln (1a) bis (1g)

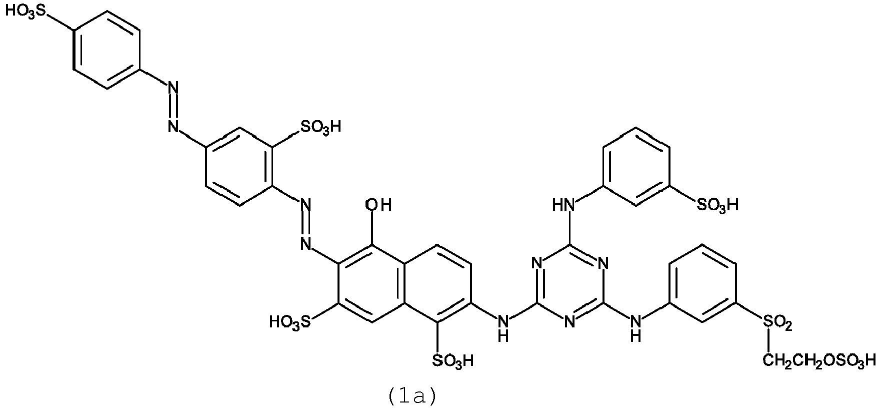

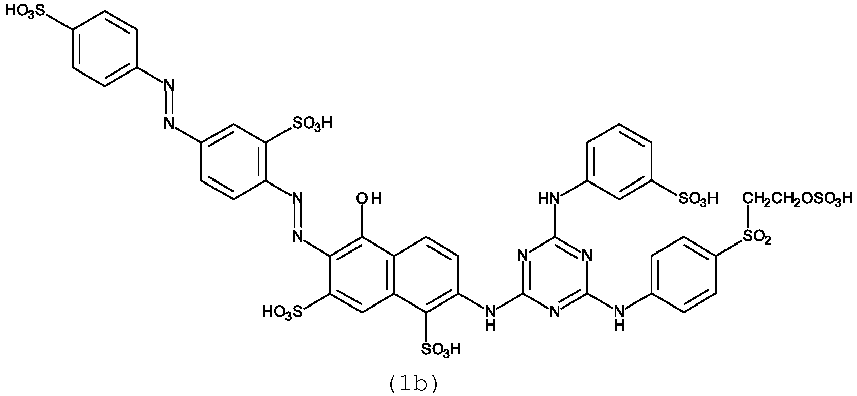

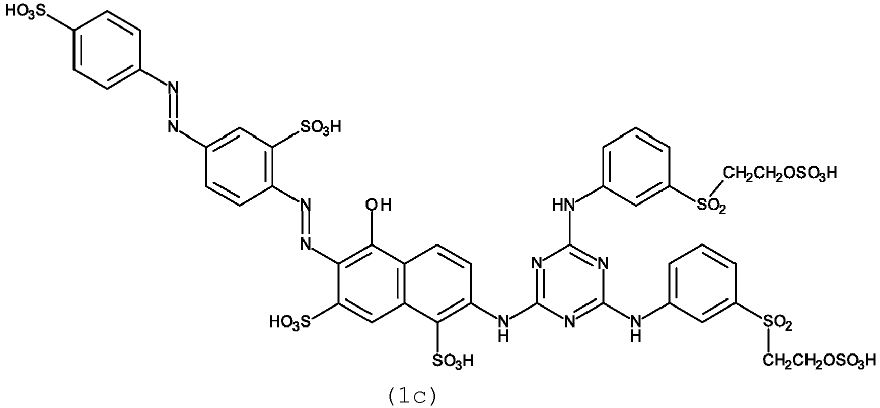

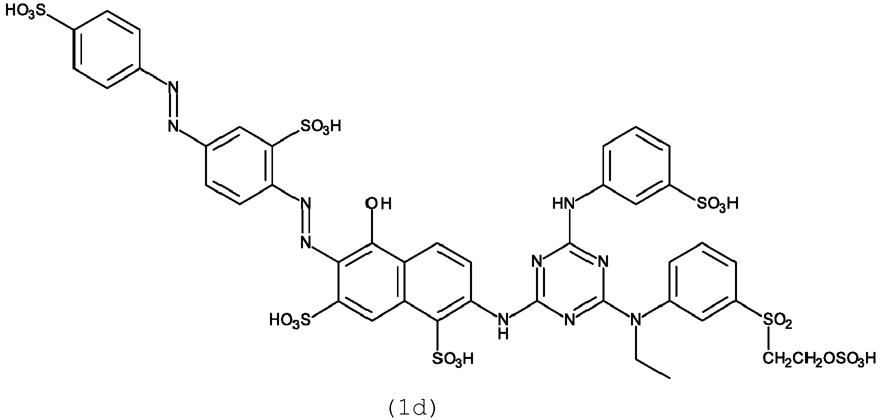

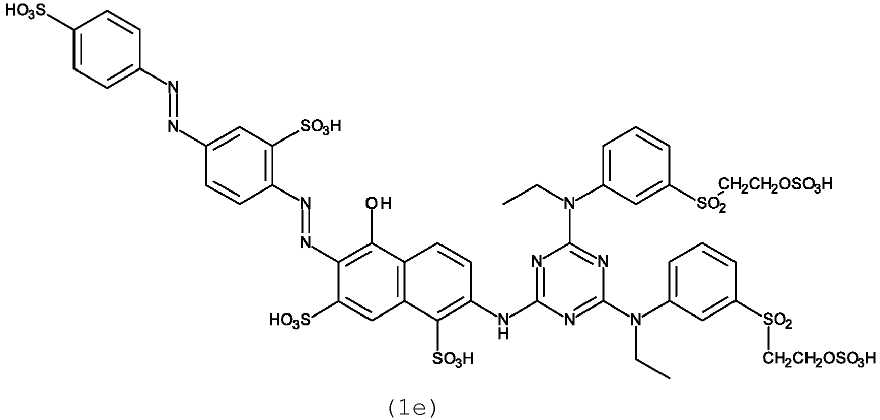

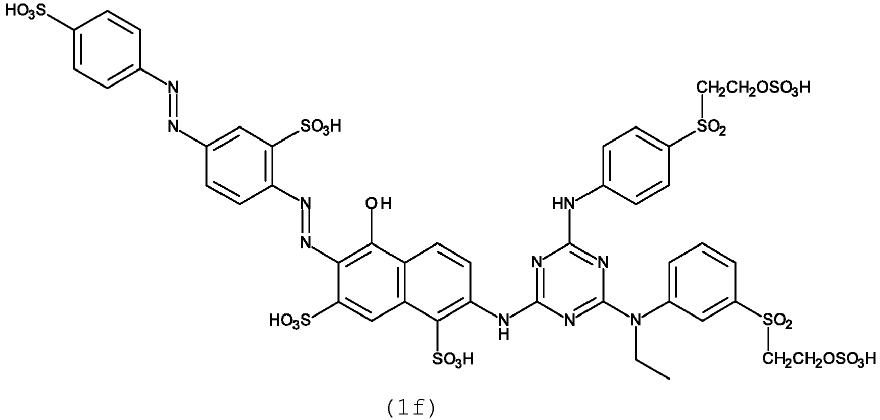

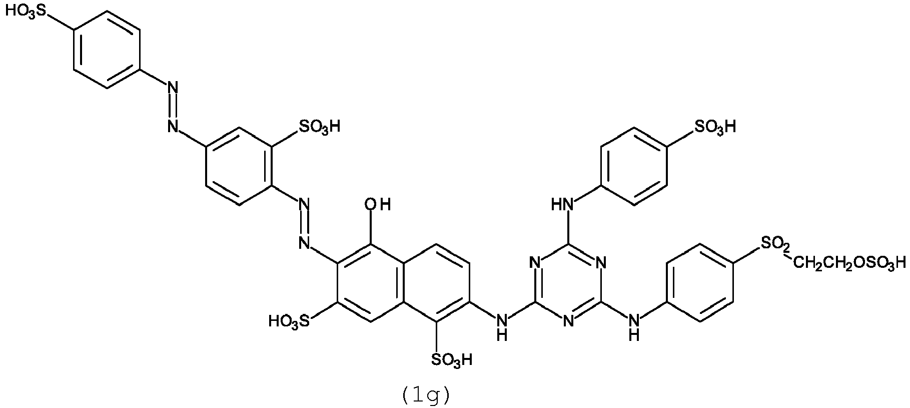

7. Verfahren zur Herstellung eines Azofarbstoffes der Formel (1) gemäss einem oder mehreren der Ansprüche 1 bis 6, wobei das Verfahren eine Diazotierungsreaktion, zwei Kondensations-reaktionen und eine Kupplungsreaktion umfasst, **dadurch gekennzeichnet, dass** im Zuge des Verfahrens Verbindungen der Formeln (2), (3), (4), (5) und (6) miteinander umgesetzt werden 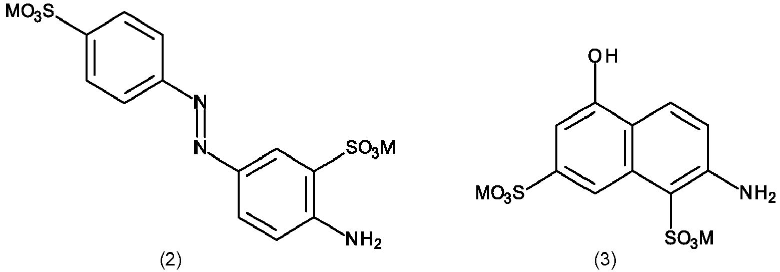 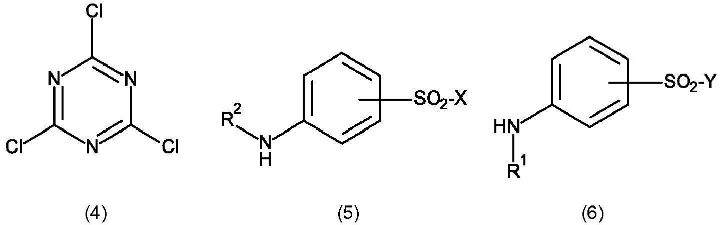 worin
M für Wasserstoff oder ein Alkalimetall steht;
R¹ Wasserstoff, Methyl oder Ethyl bedeutet;
R² Wasserstoff, Methyl oder Ethyl sind;
X für -OM, -CH=CH₂ oder -CH₂-CH₂-Z steht und
Y -CH=CH₂, -CH₂-CH₂-Z bedeutet, und
worin
Z eine unter Alkaliwirkung abspaltbare Gruppe ist.

8. Verwendung eines Azofarbstoffs gemäss einem oder mehreren Ansprüchen 1 bis 6 zum Färben oder Bedrucken von Naturfasermaterial, insbesondere Baumwolle, oder von Hydroxy- und/oder Carbonamidgruppen-haltigem Material.

9. Verwendung gemäss Anspruch 8, **dadurch gekennzeichnet, dass** der Azofarbstoff als Flüssigpräparation als Färbemittel eingesetzt wird.

10. Verfahren zum Färben oder Bedrucken von Naturfasermaterial, insbesondere Baumwolle, oder von Hydroxy- und/oder Carbonamidgruppen-haltigem Material, **dadurch gekennzeichnet, dass** man einen oder mehrere Azofarbstoffe gemäss einem oder mehreren der Ansprüche 1 bis 6 in gelöster Form auf das Material aufbringt und auf dem Material mittels Wärme und/oder mit Hilfe eines alkalisch wirkenden Mittels fixiert.
